**Europäisches Patentamt**

**European Patent Office**

**Office européen des brevets**

(19)

(11) Veröffentlichungsnummer: **0 147 674**
**B1**

(12) # EUROPÄISCHE PATENTSCHRIFT

(45) Veröffentlichungstag der Patentschrift:
08.04.87

(51) Int. Cl.⁴: **C 08 G 18/08,** C 08 G 18/12,
C 09 D 3/72

(21) Anmeldenummer: 84114656.6

(22) Anmeldetag: 03.12.84

(54) **Wässrige Polyurethan-Einbrennlacke und ihre Verwendung zur Herstellung von Lackfilmen und Beschichtungen.**

(30) Priorität: 15.12.83 DE 3345448

(43) Veröffentlichungstag der Anmeldung:
10.07.85 Patentblatt 85/28

(45) Bekanntmachung des Hinweises auf die Patenterteilung:
08.04.87 Patentblatt 87/15

(84) Benannte Vertragsstaaten:
AT BE CH DE FR GB IT LI NL SE

(56) Entgegenhaltungen:
EP-A-0 022 452
US-A-4 403 085

(73) Patentinhaber: BAYER AG, Konzernverwaltung RP
Patentabteilung, D-5090 Leverkusen 1 Bayerwerk
(DE)

(72) Erfinder: Nachtkamp, Klaus, Dr., Leuchterstrasse
112, D-5000 Köln 80 (DE)
Erfinder: Schwindt, Jürgen, Dr., von- Böttinger-
Strasse 14, D-5090 Leverkusen 1 (DE)
Erfinder: Noble, Karl- Ludwig, Dr., Gerstenkamp
12, D-5000 Köln 80 (DE)
Erfinder: Stahl, Hans- Georg, Dr., Theodor-
Wabnitz- Strasse 22, D-2900 Oldenburg (DE)

EP 0 147 674 B1

## Beschreibung

Die vorliegende Erfindung betrifft neue Polyurethan-Einbrennlacke, die in überwiegend wäßrigem Medium gelöst oder dispergiert sind, sowie ihre Verwendung zur Herstellung von Lackfilmen und Beschichtungen.

Lacke, deren Lösungsmittel ganz oder teilweise aus Wasser besteht, sind aus Gründen des Umweltschutzes und zur Einsparung erdölabhängiger organischer Lösungsmittel von zunehmenden technischen Interesse. Es werden seit geraumer Zeit Anstrengungen unternommen, wäßrige Lacke herzustellen, die in ihren Eigenschaften den organisch gelösten Lacken ebenbürtig sein sollen. Dieses Ziel konnte bislang nicht in vollem Umfang erreicht werden. Daher sind wäßrige Lacke, sieht man von den kationischen Elektrotauchlacken ab, zur Herstellung hochwertiger Lackierungen nur begrenzt im Einsatz.

Eines der Hauptprobleme bei der Anwendung wäßriger Lacksysteme ist ihre schlechte Pigmentierbarkeit. Bei Pigmentgehalten, wie sie zur Erzielung einer guten Deckkraft erforderlich sind, verlieren Wasserlacke in der Regel ihren Glanz; oft verschlechtern sich auch mit zunehmender Pigmentierung die anderen lacktechnischen Eigenschaften wie Dehnbarkeit, Schlagelastizität, Haftung und Korrosionsschutz.

Zur Überwindung dieser Pigmentierungsprobleme wird in DE-AS 2 507 884 vorgeschlagen, carboxylgruppenhaltige Polyacrylat- oder Polyester-Lackbindemittel vor ihrer Dispergierung in Wasser in niedrigsiedenden organischen Lösungsmitteln zu lösen und die Pigmente in diese Lösung einzuarbeiten. Die so resultierende organische Pigmentdispersion wird nach Neutralisation der Carboxylgruppen in Wasser dispergiert und das organische Lösungsmittel durch azeotrope Destillation entfernt. Diese Verfahrensweise ist in mehrfacher Hinsicht nachteilig. Zum einen stellt der Umweg über die organische Pigmentdispersion mit anschließender azeotroper Destillation gegenüber der üblichen Lackanreibung einen beträchtlich erhöhten technischen Aufwand dar. Zum anderen schränkt die Pigmentierung vor Überführung des Lackes in eine wäßrige Dispersion die Freiheit des Herstellers zur Formulierung seiner Lacke ein, da der einmal dispergierte Ansatz in seiner Pigmentierung nicht mehr verändert werden kann.

Aufgabe der vorliegenden Erfindung war es daher, ein wäßriges Lacksystem zur Verfügung zu stellen, das die geschilderten Pigmentierungsprobleme nicht aufweist. Es sollte in wäßriger Phase nach den in der Lacktechnologie üblichen Methoden mit den zur Erzielung einer guten Deckkraft erforderlichen Mengen an Pigmenten versetzt werden können und nach konventionellem Auftrag Lacke mit gutem Glanz liefern, die sich bei hoher Härte durch gute Dehnbarkeit sowie gute Haftung und einen guten Korrosionsschutz auszeichnen.

Diese Aufgabe konnte durch die Bereitstellung der nachstehenden näher beschriebenen erfindungsgemäßen Lacksysteme gelöst werden. Der Erfindung liegt die überraschende Baobachtung zugrunde, daß wäßrige Lösungen bzw. Dispersionen von hitzehärtbaren Gemischen aus Carboxylatgruppen sowie blockierte Isocyanatgruppen aufweisenden Polyurethan-Prepolymeren und Carboxylatgruppen sowie Hydroxylgruppen aufweisenden Polyurethan-Prepolymeren die oben beschriebenen Pigmentierungsprobleme nicht aufweisen, wenn diese Polyurethan-Prepolymer-Gemische bestimmte, unten näher definierte Polyether-Segmente neben bestimmten, unten näher definierten Polyester-Segmenten enthalten.

Daß die gute Pigmentierbarkeit der erfindungsgemäßen Produkte in der Tat außergewöhnlich für wäßrige Lacksysteme ist, zeigen auch Vergleichsversuche mit herkömmlichen Polyurethan-Dispersionen, wie z.B. den gemäß EP-OS 75 775 erhältlichen thermisch vernetzbaren Wasserlacken, die Carboxylatgruppen aufweisende Polyurethan-Polyharnstoffe und hydrophobe blockierte Polyisocyanate enthalten.

Kombinationen aus Carboxylatgruppen aufweisenden in Wasser löslichen bzw. dispergierbaren blockierten Polyisocyanaten und in Wasser löslichen bzw. dispergierbaren organischen Verbindungen mit gegenüber Isocyanaten reaktionsfähigen Wasserstoffatomen sind im Prinzip bekannt und in DE-PS 24 56 469 beschrieben. Dieser Patentschrift sind jedoch die für die vorliegende Erfindung wesentlichen Maßnahmen nicht zu entnehmen, die darin bestehen, ausgewählte, in Wasser lösliche bzw. dispergierbare NCO-Prepolymere mit blockierten Isocyanatgruppen mit bestimmten, in Wasser löslichen oder dispergierbaren Polyurethan-Prepolymeren mit alkoholischen Hydroxylgruppen zu kombinieren, wobei in den genannten Komponenten bestimmte Polyether- bzw. Polyester-Segmente in chemisch eingebauter Form vorliegen müssen.

In DE-OS 26 42 073 sind weiterhin spezielle hydrophile Polyurethan-Prepolymere beschrieben, die u.a. Carboxylatgruppen und blockierte Isocyanatgruppen aufweisen können und als Feststoffe in Wasser dispergiert werden. Die daraus hergestellten Beschichtungen sind selbstvernetzend, d.h., sie werden nicht in Kombination mit Reaktionspartnern eingesetzt.

Auf die Pigmentierung der Beschichtungsmittel wird in den beiden vorgenannten Patentschriften nicht eingegangen. Naturgemäß enthalten sie daher auch keine Hinweise auf Maßnahmen zur Abhilfe bei Pigmentierungsproblemen.

Auch einige spätere Veröffentlichungen haben carboxylatgruppenhaltige Polyurethan-Prepolymere mit blockierten Isocyanatgruppen sowie ihren Einsatz zur Herstellung wäßriger Lacke zum Gegenstand (DE-OS 27 08 611, EP-PS 22 452, US-PS 4 403 085). Die für die vorliegende Erfindung wesentliche Maßnahme zur Erzielung einer guten Pigmentierbarkeit wird in diesen Veröffentlichungen jedoch ebenfalls nicht beschrieben, zumal über die Pigmentierung der dort vorgestellten wäßrigen Lacksysteme ebenfalls nichts ausgesagt wird.

In DE-OS 32 34 590 sind schließlich wasserlösliche Urethanprepolymerisate mit blockierten Isocyanatgruppen beschrieben, die ionische Gruppen wie z.B. Carboxylatgruppen enthalten und sich als Klebstoffe und Imprägniermittel eignen. Eine Kombination dieser blockierten Isocyanate mit Reaktionspartnern gemäß vorliegender Erfindung einzusetzenden Art zur Herstellung von Lacken wird nicht beschrieben. Auf eine Lack-Pigmentierung wird demzufolge auch in dieser Patentanmeldung nicht eingegangen.

Gegenstand der vorliegenden Erfindung sind Pigmente und/oder Füllstoffe, sowie Kombinationen aus

a) ganz oder teilweise neutralisierte Carboxylgruppen sowie blockierte Isocyanatgruppen aufweisenden Polyurethan-Prepolymeren

mit

b) ganz oder teilweise neutralisierte Carboxylgruppen aufweisenden Polyhydroxylverbindungen

als wesentliches Bindemittel und gegebenenfalls weitere Hilfs- und Zusatzstoffe enthaltende, wäßrige Einbrennlacke, dadurch gekennzeichnet, daß

die Bindemittelkomponente a) im wesentlichen aus einem Polyether- und/oder Polyesterurethan-Prepolymeren einer mittleren Funktionalität, bezogen auf die blockierten NCO-Gruppen, von 1,8 - 5 und eines mittleren, aus der Stöchiometrie der Ausgangsmaterialien errechenbaren Molekulargewichts von 500 - 10 000 mit einem Gehalt an blockierten Isocyanatgruppen (berechnet als NCO) von 2 - 15 Gew.-%, einem Gehalt an Urethangruppen (berechnet als -NH-CO-O-) von 5 bis 30 Gew.-% und einem Gehalt an eingebauten, zumindest teilweise neutralisierten Carboxylgruppen von 10 - 180 Milliäquivalenten pro 100 g Feststoff

und

die Bindemittelkomponente b) im wesentlichen aus einem freie alkoholische Hydroxylgruppen aufweisenden Polyether- und/oder Polyesterurethan-Prepolymeren einer mittleren Hydroxylfunktionalität von 1,8 - 5 und eines mittleren, aus der Stöchiometrie der Ausgangsmaterialien errechenbaren Molekulargewichts von 500 - 10 000 mit einem Gehalt an alkoholischen Hydroxylgruppen von 0,5 - 10 Gew.-%, an Urethangruppen von 5 bis 30 Gew.-% und an eingebauten, zumindest teilweise neutralisierten Carboxylgruppen von 10 - 180 Milliäquivalenten pro 100 g Feststoff

bestehen, wobei

(i) die Komponenten a) und b) in einem, einem Äquivalentverhältnis von blockierten Isocyanatgruppen in a) zu Hydroxylgruppen in b) von 0,6 : 1 bis 2 : 1 entsprechenden Mengen vorliegen,

(ii) die Gesamtmenge der Carboxylgruppen und ihr Neutralisiationsgrad so bemessen sind, daß die Löslichkeit bzw. Dispergierbarkeit des Bindemittels in Wasser gewährleistet ist.

(iii) in den Kombinationen der Bindemittelkomponenten a) und b) sowohl eingebaute Polyethersegmente als auch eingebaute Polyestersegmente vorliegen, wobei die Gesamtmenge der genannten Segmente jeweils mindestens 10 Gew.-%, bezogen auf die Kombination aus a) und b) beträgt und

(iv) die genannten Polyethersegmente zu höchstens 10 Gew.-% aus Ethylenoxideinheiten -CH$_2$-CH$_2$-O- bestehen.

Gegenstand der Erfindung ist auch die Verwendung der erfindungsgemäßen wäßrigen Einbrennlacke zur Herstellung von Lackfilmen und Beschichtungen.

Die Bindemittel der erfindungsgemäßen wäßrigen Einbrennlacke werden hergestellt aus a) Carboxyl(at)gruppen aufweisenden Polyurethan-Prepolymeren mit (im statistischen Mittel) mindestens 1,8, vorzugsweise mindestens 2 end- und/oder seitenständigen blockierten Isocyanatgruppen und b) Carboxyl(at)gruppen aufweisenden Polyurethan-Prepolymeren mit (im statistischen Mittel) mindestens 1,8, vorzugsweise mindestens 2 end- und/oder seitenständigen Hydroxylgruppen.

Ausgangsmaterialien zur Herstellung der Komponente a) sind

1. beliebige organiscne Polyisocyanate, vorzugsweise Diisocyanate der Formel Q(NCO)$_2$

wobei Q für einen aliphatischen Kohlenwasserstoffres mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol, bzw. Gemische dieser Isomeren, 4,4'- oder 2,4'-Diisocyanatodiphenylmethan, 4,4'-Diisocyanatodiphenylpropan-(2,2), p-Xylylendiisocyanat und α, α', α',-Tetramethyl-m-oder p-Xylylendiisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden. Beispiele derartiger höherfunktioneller Polyisocyanate sind Tris-(6-isocyanatohexyl)-biuret, gegebenenfalls im Gemisch mit seinen höheren Homologen, Tris-(6-isocyanatohexyl)-isocyanurat, gegebenenfalls im Gemisch mit seinen höheren Homologen, wie es beispielsweise gemäß DE-OS 28 39 133 durch Trimerisierung von Hexamethylendiisocyanat zugänglich ist, sowie weitere durch Trimerisierung von aliphatischen und/oder aromatischen Diisocyanaten wie z.B. Isophorondiisocyanat, Diisocyanatotoluol und Hexamethylendiisocyanat erhältliche, Isocyanuratgruppen aufweisende Polyisocyanate, wie sie zum bekannten Stand der Technik gehören. Sehr gut einsetzbare Polyisocyanate sind auch die an sich bekannten Urethangruppen aufweisende Polyisocyanate, wie sie beispielsweise durch Umsetzung von überschüssigen Mengen an 2,4-Diisocyanatotoluol oder an Isophorondiisocyanat mit einfachen mehrwertigen Alkoholen des Molekulargewichtsbereich 62 - 300, insbesondere mit Trimethylolpropan und anschließende destillative Entfernung des nichtumgesetzten Diisocyanatüberschusses erhalten werden können.

Bei der Mitverwendung der genannten höherfunktionellen Polyisocyanate ist ihre Menge so bemessen, daß die unten angegebene maximale Funktionalität der resultierenden blockierten Polyurethan-Prepolymeren nicht überschritten wird.

Die alleinige Verwendung von höherfunktionellen Polyisocyanaten als Isocyanatbausteine für die erfindungsgemäßen Prepolymere ist möglich, wenn z.B. gleichzeitig ausreichende Mengen an monofunktionellen Aufbaukomponenten mit aktiven Wasserstoffatomen eingesetzt werden.

2. Polyether- und/oder Polyester-Polyole der in der Polyurethan-Chemie an sich bekannten Art, vorzugsweise Polyether- und/oder Polyester-Diole mit Molekulargewichten von 300 bis 2000. Die in Frage kommenden Hydroxylgruppen aufweisenden Polyether werden z.B. durch Polymerisation von cyclischen Ethern wie vorzugsweise Propylenoxid oder auch Butylenoxid, Tetrahydrofuran, Styroloxid und/oder Epichlorhydrin mit sich selbst, z.B. in Gegenwart von $BF_3$, oder durch Anlagerung dieser Verbindungen, gegebenenfalls im Gemisch oder nacheinander, an Startkomponenten mit reaktionsfähigen Wasserstoffatomen wie Alkohole und Amine, z.B. Wasser, Ethylenglykol, Propylenglykol-(1,3) bzw. -(1,2), 4,4'-Dihydroxy-diphenyl-propan (Bisphenol A) oder Anilin, hergestellt.

Bei der Herstellung der erfindungsgemäß geeigneten Polyether ist auch die Mitverwendung von Ethylenoxid möglich, jedoch nur in solchen Mengen, daß die zum Aufbau der erfindungsgemäßen Einbrennlacke eingesetzten Polyether insgesamt einen Gehalt an Oxyethylen-Einheiten von maximal 10 Gew.-% aufweisen. Höhere Ethylenoxid-Anteile führen zu Lacken mit zu starker bleibender Hydrophilie und damit zu großer Wasserempfindlichkeit. Vorzugsweise enthalten die verwendeten Polyether kein Ethylenoxid und mindestens 50 Gew.-% an Propylenoxideinheiten. Besonders bevorzugt als erfindungsgemäß einzusetzende Polyether sind solche, die durch Addition von Propylenoxid an Bisphenol A hergestellt worden sind.

Die in Frage kommenden Hydroxylgruppen aufweisenden Polyester sind z.B. Umsetzungsprodukte von vorzugsweise mehrwertigen, besonders bevorzugt zweiwertigen und gegebenenfalls zusätzlich dreiwertigen Alkoholen mit vorzugsweise mehrwertigen, besonders bevorzugt zweiwertigen Carbonsäuren. Anstelle der freien Polycarbonsäuren können auch die entsprechenden Polycarbonsäureanhydride oder entsprechende Polycarbonsäureester von niederen Alkoholen zur Herstellung der Polyester verwendet werden. Es ist bevorzugt, daß bei der Herstellung der einzusetzenden Polyester-Polyole als Alkohole Hexandiol-(1,6) und/oder Neopentylglykol in einer Menge von mindestens 50 Hydroxyläquivalentprozent, bezogen auf alle bei der Herstellung der Polyester-Polyolen eingesetzten Polyhydroxylverbindungen, und als Carbonsäure, Adipinsäure in einer Menge von mindestens 50 Carboxyläquivalentprozent, bezogen auf alle bei der Herstellung der Polyester-Polyole eingesetzten Polycarbonsäuren bzw. Polycarbonsäureanhydride, (mit)verwendet werden, so daß die resultierenden Polyester zumindest zu 50 Gew.-% aus veresterten Adipinsäure-, Hexandiol- und/oder Neopentylglykoleinheiten bestehen. Besonders bevorzugt basieren die Polyester-Polyole ausschließlich auf diesen genannten Komponenten, insbesondere allein auf Hexandiol-(1,6) und Adipinsäure.

3. Gegebenenfalls darüberhinaus mitzuverwendende Polyester-Aufbaukomponenten sind als Alkohole z.B.: Ethylenglykol, Propylenglykol-(1,2) und -(1 3) Butandiol-(1,4), Octandiol-(1,8), 2-Ethyl-hexandiol-(1,3), 1,4-Bis-hydroxymethylcyclohexan, Diethylenglykol, Dipropylenglykol, Trimethylolpropan, Glycerin und Penterythrit, als Carbonsäuren, z.B.: Bernsteinsäure, Korksäure, Azelainsäure, Sebacinsäure, Phthalsäure, Isophthalsäure, Terephthalsäure, Tetrahydrophthalsäure, Hexahydrophthalsäure, Maleinsäure, Fumarsäure, gesättigte und ungesättigte Fettsäure, wie z.B. Stearinsäure, Ölsäure, Ricinolsäure, Linolsäure, Ricinensäure, Linolensäure, Elaeostearinsäure sowie aus natürlichen Ölen wie z.B. Leinöl, Sojaöl, Erdnußöl, Saffloröl, Ricinusöl, Holzöl gewonnene Fettsäure-Gemische.

Gegebenenfalls niedermolekulare Polyole mit Molekulargewichten von 62 bis 300. Beispiele für solche erfindungsgemäß geeignete Polyole sind: Ethandiol, Propandiol-(1,2) und -(1,3), Butandiol-(1,4) und (1,3), Pentandiole, Hexandiole, Octandiole wie z.B. 2-Ethylhexandiol-(1,3), Trimethylolpropan, Glycerin und Pentaerythrit.

Vertreter der genannten zur Herstellung der erfindungsgemäßen Bindemittel zu verwendenden Polyisocyanat- und Hydroxyl-Verbindungen sind z.B. in High Polymers, Vol. XVI, "Polyurethanes Chemistry and Technology", verfaßt von Saunders-Frisch, Interscience Publishers, New York, London, Band I, 1962, Seiten 32 - 42 und Seiten 44 - 54 und Band II, 1964, Seiten 5 - 6 und 198 - 199, sowie im Kunststoff-Handbuch, Band VII, Vieweg-Höchtlen, Carl-Hanser-Verlag, München 1966, z.B. auf den Seiten 54 - 71, beschrieben.

4. Hydroxycarbonsäuren und/oder deren Salze. Beispiele für solche zur Herstellung der erfindungsgemäßen Bindemittel geeigneten Hydroxycarbonsäuren sind: 2,2-Bis-(hydroxymethyl)-propionsäure (Dimethylolpropionsäure), Weinsäure, Hydroxyessigsäure, Milchsäure und Äpfelsäure. Bevorzugt werden bezüglich der Hydroxylgruppen difunktionelle Hydroxycarbonsäuren verwendet, besonders bevorzugt ist Dimethylolpropionsäure. Die genannten Hydroxycarbonsäuren können als solche oder in Form der durch Neutralisation der Carboxylgruppe mit Basen erhaltenen Salze oder auch in Form von Gemischen aus den freien Hydroxycarbonsäuren und deren Salzen eingesetzt werden. Zur Überführung der Carboxylgruppen in Carboxylatgruppen eignen sich organische oder anorganische Basen wie z.B. Amine und Alkalimetallhydroxide oder -carbonate. Bevorzugt werden organische Basen verwendet. Sollen die genannten Hydroxycarbonsäuren als Carboxylat-Salze zur Herstellung der erfindungsgemäßen Komponente a) eingesetzt werden, so dürfen die darin enthaltenen Basen keine gegenüber Isocyanat reaktiven Gruppen aufweisen, evtl. gebildetes Neutralisationswasser ist ebenfalls sorgfältig zu entfernen. Vorzugsweise werden daher in diesem Falle tertiäre Amine ohne weitere funktionelle Gruppen als Basen eingesetzt wie z.B. Triethylamin, Tributylamin, N,N-Dimethylbenzylamin, 1-Methylpiperidin und N-Methylmorpholin. Wenn die Neutralisation der Carboxylgruppen erst nach erfolgter Herstellung der Komponente a) vorgenommen wird, können selbstverständlich auch andere Basen wie z.B. Amoniak, N,N-Dimethylethanolamin, Diethanolamin, N-Methyldiethanolamin oder Triethanolamin eingesetzt werden. Besonders bevorzugt ist in diesem Falle N,N-Dimethylethanolamin.

5. Gegenüber Isocyanaten monofunktionelle Verbindungen, die sich zur reversiblen Blockierung von Isocyanatgruppen eignen und wie sie z.B. bei Z. W. Wicks, Progress in Organic Coatings, 9, 3 - 28 (1981) beschrieben sind.

Beispiele solcher zur Herstellung der erfindungsgemäßen Komponente a) geeigneten Blockierungsmittel sind: Lactame, wie ε-Caprolactam, Oxime wie Acetonoxim, Methylethylketonoxim (Butanonoxim) und Cyclohexanonoxim, C-H-acide Verbindungen wie Malonsäurediethylester, Acetessigsäureethylester und Acetylaceton, Alkohole wie die einfachen Monoalkohole mit 1 bis 4 C-Atomen, 2-Ethylhexanol, Ethylenglykolmonoethylether und Diethylenglykolmonomethylether, Phenole wie Phenol, Kresol und Xylenol und heterocyclische Verbindungen, wie Triazole, Imidazoline, Imidazole und Tetrahydropyrimidine.

Die beschriebenen Blockierungsmittel können allein oder in Form von Gemischen eingesetzt werden. Bevorzugte Blockierungsmittel sind ε-Caprolactam, Butanonoxim und Malonsäurediethylester.

Zur Herstellung der erfindungsgemäßen Komponente a) werden Art und Mengenverhältnisse der genannten Ausgangsmaterialien so gewählt, daß die resultierende Komponente a) vorzugsweise
i) einen Gehalt an blockierten Isocyanatgruppen, berechnet als NCO, von 2 bis 15, vorzugsweise 3 bis 10 Gew.-%,
ii) eine mittlere Funktionalität, bezogen auf die blockierten NCO-Gruppen, von 1,8 bis 5, vorzugsweise von 2 bis 3,
iii) einen Gehalt an eingebauten, gegebenenfalls ganz oder teilweise neutralisierten Carboxylgruppen von 10 bis 180, vorzugsweise von 20 bis 100 Milliäquivalenten pro 100 g Feststoff,
iv) ein Gehalt an Urethangruppen -NH-CO-O- von 5 bis 30, vorzugsweise 10 bis 20 Gew.-% und
v) ein mittleres, aus der Stöchiometrie der Ausgangsmaterialien errechenbares Molekulargewicht von 500 bis 10 000, insbesondere 800 bis 4000 aufweist.

Die Herstellung der erfindungsgemäßen Komponente a) erfolgt nach an sich bekannten Prinzipien des Standes der Technik. Die Zugabe der oben angegebenen Reaktionspartner kann somit grundsätzlich in beliebiger Reihenfolge vorgenommen werden. Eine bevorzugte Verfahrensweise besteht jedoch darin, Polyisocyanate, Polyether- und/oder Polyesterpolyole und gegebenenfalls mitverwendete niedermolekulare Polyole in solchen Mengenverhältnissen zu vermischen, die einem Verhältnis von Isocyanatgruppen zu Hydroxylgruppen von etwa 1,05 bis 5, vorzugsweise 1,2 bis 3 entspricht, diese Verbindungen zu freie NCO-Gruppen aufweisenden Prepolymeren umzusetzen, anschließend einen Teil dieser NCO-Gruppen nach den bekannten Verfahren des Standes der Technik zu blockieren und zuletzt die noch freien NCO-Gruppen mit Hydroxycarbonsäuren oder deren Salzen reagieren zu lassen. Eine ebenfalls bevorzugte Ausführungsform der beschriebenen Verfahrensweise ist es, einen Teil des

Blockierungsmittels vor und den anderen Teil nach der Umsetzung mit der Hydroxycarbonsäure zuzugeben.

Die Herstellung der Komponente a) kann in der Schmelze oder in Gegenwart von organischen Lösungsmitteln erfolgen. In der Schmelze können Temperaturen bis zu etwa 180°C zur Anwendung kommen. Es lassen sich so z.B. Harze herstellen, die bei Abkühlung auf Raumtemperatur glasartig erstarren und nach Zerkleinerung analog der Verfahrensweise von DE-OS 26 42 073 als Feststoff in Wasser dispergiert werden können. Bei der alternativen Mitverwendung von Lösungsmitteln gibt man im allgemeinen so viel organisches Lösungsmittel zu, daß das blockierte Prepolymer bei ca. 100°C gut rührbar ist, so daß die anschließende Dispergierung durch Vermischen des heißen, flüssigen Produktes mit Wasser erfolgen kann. Im allgemeinen genügen dazu Lösungsmittel in Mengen bis zu 10 Gew.-%, bezogen auf den Feststoff der Komponente a). Geeignete Lösungsmittel sind z.B. Methylisobutylketon, N-Methylpyrrolidon, Dimethylformamid, Ethylencarbonat, Ethylenglykolmonoethyletheracetat, Propylenglykolmonomethyletheracetat, Toluol oder Xylol.

Die Ausgangsmaterialien zur Herstellung der Komponente b) können der gleichen Substanzpalette entnommen werden, wie sie zur Herstellung der Komponente a) ausführlich beschrieben ist, selbstverständlich mit Ausnahme der Blockierungsmittel.

Es handelt sich also im einzelnen um die Polyisocyanate, wie sie dort unter Punkt 1 beschrieben sind, die Polyether- und/oder Polyester-Polyole gemäß Punkt 2, die niedermolekularen Polyole gemäß Punkt 3 sowie die Hydroxycarbonsäuren und Amine gemäß Punkt 4.

Im Unterschied zu a) handelt es sich bei der Komponente b) um Prepolymere mit end- und/oder seitenständigen alkoholischen Hydroxylgruppen. Die Art und Mengenverhältnisse der genannten Ausgangsmaterialien werden daher so gewählt, daß die resultierende Komponente b) vorzugsweise

i) einen Gehalt an alkoholischen Hydroxylgruppen (OH) von 0,5 bis 10, vorzugsweise 1 bis 5 Gew.-%,

ii) eine mittlere Funktionalität, bezogen auf die OH-Gruppen, von 1,8 bis 5, vorzugsweise 2 bis 3,

iii) einen Gehalt an eingebauten, gegebenenfalls ganz oder teilweise neutralisierten Carboxylgruppen von 10 bis 180, vorzugsweise von 20 bis 100 Milliäquivalenten pro 100 g Feststoff,

iv) einen Gehalt an Urethangruppen -NH-CO-O- von 5 bis 30, vorzugsweise 10 bis 20 Gew.-% und

v) ein mittleres, aus der Stöchiometrie der Ausgangsmaterialien errechenbares Molekulargewicht von 500 bis 10 000, insbesondere 800 bis 4000 aufweist.

Die Herstellung der erfindungsgemäßen Komponente b) erfolgt ebenfalls nach an sich bekannten Prinzipien der Technik. Die Zugabe der oben genannten Reaktionspartner kann grundsätzlich in beliebiger Reihenfolge vorgenommen werden. Eine bevorzugte Verfahrensweise besteht darin, die Polyhydroxylkomponenten, also die Polyether- und/oder Polyester-Polyole, die gegebenenfalls mitverwendeten niedermolekularen Polyole und die Hydroxycarbonsäuren, welche gegebenenfalls ganz oder teilweise neutralisiert sein können, vorzulegen und die Polyisocyanate zuzugeben. Dabei wird im allgemeinen ein Mengenverhältnis zwischen Polyolkomponenten und Polyisocyanaten eingehalten, das einem Verhältnis von Hydroxylgruppen zu Isocyanatgruppen von etwa 1,05 bis 5, vorzugsweise 1,2 bis 3 entspricht. Das beschriebene Gemisch wird dann zur Reaktion gebracht, bis alle NCO-Gruppen umgesetzt sind. Diese Reaktion kann, wie schon bei der Herstellung der Komponente a) beschrieben, in der Schmelze oder in Gegenwart von organischen Lösungsmitteln erfolgen. Die Menge und Art der gegebenenfalls mitzuverwendenden Lösungsmittel ist die gleiche wie bei der Komponente a).

Erfindungswesentlich ist nun, daß die durch die Kombination der Bindemittelkomponenten a) und b) herzustellenden Bindemittel der erfindungsgemäßen wäßrigen Einbrennlacke sowohl über Urethangruppen eingebaute Polyether- als auch über Urethangruppen eingebaute Polyestersegmente auf Basis der obengenannten Polyether- bzw. Polyesterpolyole enthalten. Dies bedeutet, daß entweder die Komponente a) mindestens ein solches Polyestersegment und die Komponente b) mindestens ein solches Polyethersegment oder die Komponente a) mindestens ein solches Polyethersegment und die Komponente b) mindestens ein solches Polyestersegment oder die Komponente a) und/oder die Komponente b) sowohl mindestens ein solches Polyethersegment als auch ein solches Polyestersegment enthalten. Vorzugsweise weist sowohl die Komponente a) als auch die Komponente b) mindestens ein solches Polyether und/oder Polyestersegment auf. Besonders bevorzugt enthält entweder die Komponente a) mindestens ein solches Polyestersegment und die Komponente b) mindestens ein solches Polyethersegment oder die Komponente a) mindestens ein solches Polyethersegment und die Komponente b) mindestens ein solches Polyestersegment. Hierbei müssen im übrigen in den durch Kombination der Komponenten a) und b) hergestellten Bindemitteln mindestens 10 Gew.-%, vorzugsweise 15 - 50 Gew.-% Polyethersegmente und mindestens 10 Gew.-%, vorzugsweise 10 - 40 Gew.-% Polyestersegmente vorliegen. Die Polyestersegmente basieren im übrigen vorzugsweise zumindest zu 50 Gew.-% auf Adipinsäure Hexandiol-(1,6) und/oder Neopentylglykol in veresterter Form. Unter "Polyethersegmenten" bzw. "Polyestersegmenten" sind hierbei jeweils Struktureinheiten zu verstehen, wie sie durch Entfernung der endständigen Hydroxylgruppen aus den obengenannten Polyether- bzw. Polyesterpolyolen erhalten werden.

Zur Herstellung der erfindungsgemäßen wäßrigen Einbrennlacke wird zunächst entweder so vorgegangen, daß jede der beschriebenen Komponenten a) und b) für sich in Wasser gelöst bzw. dispergiert wird und anschließend die erhaltenen wäßrigen Lösungen oder Dispersionen miteinander vermischt werden, oder so, daß die genannten Komponenten a) und b) in Substanz gemischt werden und die erhaltene Mischung dann in Wasser gelöst oder dispergiert wird. Dabei ist es selbstverständlich nötig, daß die Carboxylgruppen der Prepolymere a) und b) in ausreichender Menge mit den oben genannten Basen neutralisiert sind. Wenn diese Neutralisation noch nicht bei der Herstellung der Prepolymere erfolgt ist, kann sie durch Zugabe der Basen zu den Prepolymeren vor deren Dispergierung oder durch Zugabe der Basen zum Dispergierwasser erfolgen.

Ob bei der Dispergierung Lösungen oder Dispersionen erhalten werden, hängt vom Gehalt der Kombinationen an neutralisierten Carboxylgruppen ab. Vorzugsweise weisen die Kombinationen aus den Prepolymeren a) und b) einen Gehalt von 20 bis 100 Milliäquivalenten an Carboxylatgruppen (COO⁻) pro 100 g Feststoff auf.

Bei der Herstellung der Bindemittel werden die Einzelkomponenten a) und b) im übrigen solchen Mengen eingesetzt, die einem Äquivalentverhältnis vom blockierten Isocyanatgruppen in a) zu Hydroxylgruppen in b) von 0,6 : 1 bis 2 : 1, vorzugsweise von 0,9 : 1 bis 1,5 : 1 entsprechen.

Die Dispergierung der Komponenten a) und b) oder der Gemische aus a) und b) erfolgt entweder durch Vermischen mit Wasser aus der Schmelze oder durch Vermischen der zerkleinerten Feststoffe mit Wasser. Im ersten Falle benutzt man vorzugsweise erwärmtes Wasser von ca. 50 - 100° C, im zweiten Falle vorzugsweise Wasser von Raumtemperatur, wobei man z.B. wie in DE-OS 26 42 073 beschrieben verfährt. In beiden Fällen ist es sowohl möglich, das Wasser zu den Harzen zu geben als auch die Harze in das Wasser unter Rühren einzutragen.

Man benutzt für die Dispergierung so viel Wasser, daß die Bindemittel-Dispersionen oder Lösungen einen Festkörperanteil, von 20 bis 70 Gew.-%, vorzugsweise von 30 bis 50 Gew.-% aufweisen. Weiteres Verdünnen mit Wasser ist jederzeit möglich.

Der letzte Schritt zur Herstellung der erfindungsgemäßen wäßrigen Einbrennlacke besteht vorzugsweise in der Einarbeitung von Pigmenten und gegebenenfalls von weiteren in der Lacktechnologie üblichen Hilfs- und Zusatzmitteln, wie z.B. Füllstoffen in die beschriebenen Bindemittel-Dispersionen oder -Lösungen. Die Pigmentierung kann direkt in wäßriger Phase nach den in der Lacktechnologie allgemein üblichen Methoden erfolgen, also z.B. durch Dispergierung in einer Kugelmühle, einer Perlmühle oder einem Dissolver.

Grundsätzlich ist es auch möglich, die Pigmente und/oder gegebenenfalls mitzuverwendenden weiteren Hilfs- und Zusatzstoffe in eine der Bindemittelkomponenten a) und b) oder in das durch Kombination dieser Komponenten hergestellte Bindemittel vor der Herstellung der wäßrigen Dispersion einzuarbeiten. Eine derartige Arbeitsweise ist allerdings weniger bevorzugt.

In die Lacke können die üblichen Pigmente und Füllstoffe eingearbeitet werden, sofern sie nicht wasserlöslich sind oder größere Mengen wasserlöslicher Salze enthalten. Beispiele für solche Pigmente und Füllstoffe sind: Titandioxid, Eisenoxide, Zinkphosphat, Ruß, Glimmer, Talkum, Kaolin, Bariumsulfat, Kreide oder auch Metalle wie z.B. Aluminium-Bronzen.

Es ist ein Vorteil der erfindungsgemäßen wäßrigen Einbrennlacke, daß sie sich ohne die bei wäßrigen Lacksystemen sonst üblichen Nachteile vergleichsweise hoch pigmentieren lassen. Im allgemeinen werden Pigment- bzw. Füllstoff-Gehalte von 5 bis 200 Gew.-% bezogen auf das Bindemittel, eingestellt. Vorzugsweise enthalten die Lacke 80 bis 140 Gew.-% Pigmente und Füllstoffe, bezogen auf den Bindemittel-Feststoff.

Gegebenenfalls können die fertigen Lacke auch noch mit Verlaufshilfsmitteln versetzt werden. Dazu eignen sich im Prinzip die organischen Lösungsmittel, die schon bei der Herstellung der Komponente a) beschrieben sind. Darüberhinaus einzusetzende Verlaufshilfsmittel sind z.B. n-Butanol, Isobutanol, Isopropanol, Butylenglykol oder andere Alkohole.

Die gebrauchsfertigen erfindungsgemäßen Lacke weisen im allgemeinen Festkörpergehalte, bezogen auf alle festen Bestandteile wie Bindemittel, Pigmente und Füllstoffe, von 20 bis 80 Gew.-%, vorzugsweise von 40 bis 60 Gew.-% auf.

Die erfindungsgemäßen wäßrigen Einbrennlacke eignen sich in ausgezeichneter Weise zur Herstellung von Lackfilmen und Beschichtungen auf hitzeresistenten Substraten, insbesondere auf Metallen. Die herausragende Eigenschaft dieser Einbrennlacke ist, daß sie trotz hoher Pigmentierung Lacküberzüge mit gleichzeitig gutem Glanz, hoher Härte, guter Dehnbarkeit sowie guter Haftung und ausgezeichnetem Korrosionsschutz ergeben.

Zur Herstellung der Überzüge werden die Substrate mit den erfindungsgemäßen wäßrigen Lacken nach den üblichen Methoden, beispielsweise durch Spritzen, Streichen, Tauchen, Gießen oder Walzen, beschichtet. Die thermische Aushärtung erfolgt im allgemeinen im Temperaturbereich von 80 bis 250° C, vorzugsweise von 100 bis 180° C, wobei die Entfernung des Wassers aus den Lackfilmen durch Verdunsten oder Verdampfen vor oder während dieser Hitzebehandlung stattfindet.

Die nachstehenden Beispiele dienen zur weiteren Erläuterung der Erfindung. Alle Prozentangaben beziehen sich, soweit nicht andert vermerkt, auf Gewichtsprozente.

**Beispiele**

**Beispiel 1**

A. Herstellung einer erfindungsgemäßen Komponente a):

Zu 222 g Isophorondiisocyanat wird bei 60° C ein wasserfreies Gemisch aus 13,4 g Trimethylolpropan und 168 g eines Polyesters aus Adipinsäure und Hexandiol-(1,6) mit der OH-Zahl 134 (Molekulargewicht: 840) gegeben. Man rührt das Gemisch bei 90° C, bis der berechnete NCO-Gehalt von 13,5 % erreicht ist. Dann gibt man 45,2 g ε-Caprolactam zu. Die Temperatur steigt auf ca. 110° C. Nach Abklingen der exothermen Reaktion wird mit 27 g N-Methylpyrrolidon verdünnt und anschließend werden portionsweise 40,2 g Dimethylolpropionsäure zugesetzt. Man rührt 30 min. bei 120° C, gibt dann weitere 33,9 g ε-Caprolactam zu und rührt nochmals ca. 30 min. bei 120° C nach, bis keine freien NCO-Gruppen mehr nachweisbar sind (IR-Spektrum). Nach Zugabe von 25,6 g N,N-Dimethylethanolamin enthält man eine erfindungsgemäße Komponente a) in Form eines hochviskosen Harzes.

Mittleres Molekulargewicht: 1830
Mittlere Funktionalität: 2,33
Gehalt an blockierten Isocyanatgruppen (NCO): 5,4 % im Feststoff
Gehalt an Urethangruppen: 14,0 % im Feststoff
Gehalt an Carboxylatgruppen: 52,4 m Äquiv./100 g Feststoff
Gehalt an Carboxylgruppen: 2,2 m Äquiv./100 g Feststoff

Zur Dispergierung werden zu dem 90° C warmen Harz unter gutem Rühren 918 g demineralisiertes Wasser zugegeben, das zuvor auf 90° C angewärmt wurde. Man erhält eine stabile, leicht opake, lösungsähnliche Dispersion. Der Feststoffgehalt beträgt 35 % und die Fordbecherviskosität (4 mm-Düse) 120 Sekunden.

B. Herstellung einer erfindungsgemäßen Komponente b):

Zu 550 g eines wasserfreien Polyethers aus Propylenoxid und Bisphenol A mit der OH-Zahl 202 (Molekulargewicht: 550) gibt man 50 g N-Methylpyrrolidon, 13,4 g Trimethylolpropan und 46,9 g Dimethylolpropionsäure und erhitzt die Mischung auf 110° C, bis sie klar ist. Dann kühlt man auf 80° C ab und gibt 168 g Hexamethylendiisocyanat zu. Es setzt eine exotherme Reaktion ein, in deren Verlauf die Temperatur auf 100° C ansteigt. Das Gemisch wird ca. 1 h bei 100° C gerührt, bis keine freien NCO-Gruppen mehr nachweisbar sind (IR-Spektrum). Nach Zugabe von 26,7 g N,N-Dimethylethanolamin erhält man eine erfindungsgemäße Komponente b) in Form eines hochviskosen Harzes.

Mittleres Molekulargewicht: 1790
Mittlere Funktionalität: 2,22
Hydroxylgruppengehalt: 2,1 % im Feststoff
Gehalt an Urethangruppen: 14,7 % im Feststoff
Gehalt an Carboxylatgruppen: 37,3 m Äquiv./100 g Feststoff
Gehalt an Carboxylgruppen: 6,2 m Äquiv./100 g Feststoff

Zur Dispergierung werden zu dem 90° C warmen Harz unter gutem Rühren 1369 g demineralisiertes Wasser gegeben, das zuvor auf 90° C angewärmt wurde. Man erhält eine stabile, leicht opake, lösungsähnliche Dispersion. Der Feststoff beträgt 35 % und die Fordbecherviskosität (4 mm-Düse) 68 Sekunden.

C. Herstellung eines wäßrigen Einbrennlackes:

Aus 140 g der gemäß Vorschrift A hergestellten Dispersion, 146,7 g der gemäß Vorschrift B hergestellten Dispersion, 50 g demineraliertem Wasser und 70 g Titandioxid wird in einer Perlmühle ein pigmentierter Lack mit einem Festkörpergehalt von 42 % und einer Fordbecherviskosität (4 mm-Düse) von 19 Sekunden hergestellt. Der Pigmentgehalt beträgt 70 %, bezogen auf das Bindemittel. Das Bindemittel enthält 34,7 % an Polyethersegmenten und 15,1 % an Polyestersegmenten, die ausschließlich aus Adipinsäure und Hexandiol-(1,6) aufgebaut sind.

Der Lack wird durch Spritzen auf ein entfettetes Stahlblech appliziert und 30 Minuten bei 180° C eingebrannt. Die Eigenschaften des so erhaltenen Lacküberzuges sind in der folgenden Tabelle denen eines Lackes gemäß DE-AS 25 07 884, Beispiel 4 gegenübergestellt:

| | erfindungsge-mäßer Lack (Beispiel 1) | Lack gemäl DE-AS 25 0: |
|---|---|---|
| Pigmentierungshöhe: | 70 % TiO$_2$ | 70 % TiO$_2$ |
| Schichtdicke: | 35 μm | 45 μm |
| Glanz 60° C (DIN 67 530) | 90 | 88 |
| Pendelhärte (DIN 53 157): | 143 sec. | 121 sec. |
| Erichsentiefung (DIN 53 156): | 9,8 mm | 9,2 mm |
| Dornbiegeprüfung (ASTM-D-522-60): | 32 % | 180° i.O. |
| Gitterschnittprüfung: (DIN 53 151): | Gt O | in Ordnung |

Die Gegenüberstellung zeigt, daß der erfindungsgemäße wäßrige Einbrennlack, obwohl er direkt in wäßriger Phase pigmentiert wurde, dem im Umweg über die organische Pigmentdispersion hergestellten wäßrigen Lack gemäß DE-AS 25 07 884 bezüglich Glanz und mechanischen Eigenschaften mindestens ebenbürtig ist.

**Beispiel 2** (Vergleichsbeispiel)

Es wird eine ein hydrophobes blockiertes Polyisocyanat enthaltende wäßrige Polyurethan-Polyharnstoff-Dispersion gemäß EP-OS 75 773, Beispiel 1 hergestellt und in einer Perlmühle 70 %ig mit Titandioxid pigmentiert. Ein daraus hergestellter eingebrannter Lacküberzug (Schichtdicke: 35 μm) weist einen Glanz (60°) von nur 62 auf.

Der Vergleich mit dem gemäß Beispiel 1 der vorliegenden Erfindung erhaltenen Lacküberzug demonstriert den durch diese Erfindung gegenüber herkömmlichen wäßrigen Polyurethandispersionen erzielten technischen Fortschritt.

**Beispiel 3**

Es werden die erfindungsgemäßen Komponenten a) und b) gemäß Beispiel 1 in Harzform hergestellt.

Die Harze werden auf 90° erwärmt. Dann gibt man 54 g des Harzes a) zu 56,4 g des Harzes b) und läßt zu dieser Mischung unter gutem Rühren 176,5 g auf 90° C erwärmtes demineralisiertes Wasser zulaufen. Es entsteht eine feinteilige, stabile Dispersion mit einem Feststoffgehalt von 35 %.

Aus dieser Dispersion wird unter Zusatz von 50 g demineralisiertem Wasser und 70 g Titandioxid in einer Perlmühle ein pigmentierter Lack mit einem Festkörpergehalt von 42 % hergestellt. Der Pigmentgehalt beträgt 70 %, bezogen auf das Bindemittel.

Die Eigenschaften des eingebrannten Lackes entsprechen in Glanz und mechanischen Werten denen des Lackes von Beispiel 1.

**Beispiel 4**

Aus 140 g der gemäß Beispiel 1, Vorschrift A hergestellten Dispersion, 73,4 g der gemäß Beispiel 1, Vorschrift B hergestellten Dispersion, 150 g eines Pigmentgemisches aus 42,5 % Titandioxid, 28 % Bariumsulfat, 28 % Calciumcarbonat, 0,9 % Eisenoxid und 0,6 % eines handelsüblichen Rheologiehilfsmittels auf Silicat-Basis ([R] Aerosil R 972, der Fa. Degussa), sowie 86 g demineralisiertem Wasser wird in einer Perlmühle ein pigmentierter Lack mit einem Festkörpergehalt von 50 % hergestellt. Der Pigmentgehalt beträgt 200 %, bezogen auf das Bindemittel.

Der Lack wird durch Spritzen auf ein entfettetes Stahlblech appliziert und 30 Minuten bei 180° C eingebrannt. Bedingt durch die hohe Pigmentierung hat der Lack zwar nur einen geringen Glanz, weist jedoch immer noch ein außergewöhnlich gutes mechanisches Eigenschaftsniveau auf:

Pigmentierungshöhe: 200 %
Schichtdicke: 32 μm
Bleistifthärte: 5 H
Pendelhärte: 120 sec
Erichsentiefung: 8,9 mm
Dornbiegeprüfung: 32 %
Gitterschnittprüfung: Gt O

**Beispiel 5**

A. Herstellung einer erfindungsgemäßen Komponente a):

Zu 174 g Diisocyanatotoluol (Gemisch aus 65 % des 2,4-und 35 % des 2,6-Isomeren) wird bei 40° C ein wasserfreies Gemisch aus 13,4 g Trimethylolpropan und 168 g eines Polyesters aus Adipinsäure und Hexandiol-(1,6) mit der OH-Zahl 134 (Molekulargewicht: 840) gegeben. Man rührt das Gemisch bei 80° C, bis der berechnete NCO-Gehalt von 15,4 % erreicht ist. Dann verdünnt man mit 70 g N-Methylpyrrolidon und gibt anschließend 79,1 g ε-Caprolactam zu. Nach ca. 1 h bei 70 - 75° C ist der berechnete NCO-Gehalt von 5,0 % unterschritten. Man gibt nun 40,2 g Dimethylolpropionsäure zu und rührt ca. 1 h, indem man die Temperatur langsam auf 100° C steigert. Danach sind keine freien NCO-Gruppen mehr nachweisbar (IR-Spektrum). Nach Zugabe von 24,5 g N,N-Dimethylethanolamin erhält man eine erfindungsgemäße Komponente a) in Form eines hochviskosen Harzes.

Mittleres Molekulargewicht: 1660
Mittlere Funktionalität: 2,33
Gehalt an blockierten Isocyanatgruppen (NCO): 5,9 % im Feststoff
Gehalt an Urethangruppen: 15,4 % im Feststoff
Gehalt an Carboxylatgruppen: 55,0 m Äquiv./100 g Feststoff
Gehalt an Carboxylgruppen: 5,0 m Äquiv./100 g Feststoff

Zur Dispergierung werden zu dem 100° C warmen Harz unter gutem Rühren 787 g demineralisiertes Wasser zugegeben, das zuvor auf 70° C angewärmt wurde. Man erhält eine stabile, leicht opake, lösungsähnliche Dispersion. Der Feststoffgehalt beträgt 35 % und die Fordbecherviskosität (4 mm-Düse) 77 Sekunden.

B. Herstellung einer erfindungsgemäßen Komponente b):

Zu 550 g eines wasserfreien Polyethers aus Propylenoxid und Bisphenol A mit der OH-Zahl 202 (Molekulargewicht: 550) gibt man 130 g N-Methylpyrrolidon, 13,4 g Trimethylolpropan und 46,9 g Dimethylolpropionsäure und erhitzt die Mischung auf 110° C, bis sie klar ist. Dann kühlt man auf 40° C ab und gibt 174 g Diisocyanatotoluol (Gemisch aus 65 % des 2,4- und 35 % des 2,6-Isomeren) zu. Es setzt eine exotherme Reaktion ein, in deren Verlauf die Temperatur auf ca. 75° C ansteigt. Das Gemisch wird ca. 1 h bei 80 - 90° C gerührt, bis keine freien NCO-Gruppen mehr nachweisbar sind (IR-Spektrum). Nach Zugabe von 31,2 g N,N-Dimethylethanolamin erhält man eine erfindungsgemäße Komponente b) in Form eines hochviskosen Harzes.

    Mittleres Molekulargewicht: 1810
    Mittlere Funktionalität: 2,22
    Hydroxylgruppengehalt: 2,1 % im Feststoff
    Gehalt an Urethangruppen: 14,5 % im Feststoff
    Gehalt an Carboxylatgruppen: 42,9 m Äquiv./100 g Feststoff
    Gehalt an Carboxylgruppen: 0 m Äquiv./100 g Feststoff

Zur Dispergierung werden zu dem 90°C warmen Harz unter gutem Rühren 1669 g demineralisiertes Wasser gegeben, das zuvor auf 70°C angewärmt wurde. Man erhält eine stabile, leicht opake, lösungsähnliche Dispersion. Der Feststoffgehalt beträgt 30 % und die Fordbecherviskosität (4 mm-Düse) 34 Sekunden.

    C. Herstellung eines wäßrigen Einbrennlackes:.

Aus 130 g der gemäß Vorschrift A hergestellten Dispersion, 175 g der gemäß Vorschrift B hergestellten Dispersion. 10 g demineralisiertem Wasser und 98 g eines Pigmentgemisches aus 42,5 % Titandioxid, 28 % Bariumsulfat, 28 % Calciumcarbonat, 0,9 % Eisenoxid und 0,6 % ((R)Aerosil R 972, der Fa. Degussa), wird in einer Perlmühle ein pigmentierter Lack mit einem Festkörpergehalt von 47 % hergestellt. Der Pigmentgehalt beträgt 100 %, bezogen auf das Bindemittel. Das Bindemittel enthält 35,9 % an Polyethersegmenten und 15,7 % an Polyestersegmenten, die ausschließlich aus Adipinsäure und Hexandiol-(1,6) aufgebaut sind.

Der Lack wird durch Spritzen auf ein entfettetes Stahlblech appliziert und 30 Minuten bei 180°C eingebrannt. Der so erhaltene Lacküberzug hat folgende Eigenschaften:

    Pigmentierungshöhe: 100 %
    Schichtdicke: 32 μm
    Glanz 60° (DIN 67 530): 82
    Pendelhärte (DIN 53 157): 154 sec
    Bleistifthärte: 3 H
    Erichsentiefung (DIN 53 156): 9,2 mm
    Dornbiegeprüfung (ASTM-D-522-60): 32 %
    Gitterschnittprüfung (DIN 53 151): GT O
    Salznebenprüfung (DIN 53 167): 21 d Wd 5 mm

Die Tabelle zeigt, daß der Lack sich außer durch guten Glanz, hohe Härte und gute Dehnbarkeit auch durch hervorragende Korrosionsschutz-Eigenschaften auszeichnet. Das erfindungsgemäße Produkt ist daher für hochwertige Lackierungen, z.B. im Automobil-Sektor geeignet. Für einen solchen Einsatz ist als weitere Voraussetzung auch die gute Haftung zu anderen Lackschichten erfüllt:

    Applikation: Gitterschnittprüfung:
    Erfindungsgemäßer Lack auf handelsüblicher KTL-Grundierung Gt 0
    Handelsüblicher Automobil-Decklack auf erfindungsgemäßem Lack Gt 0

**Beispiel 6**

Zu 222 g Isophorondiisocyanat wird bei 60°C ein wasserfreies Gemisch aus 13,4 g Trimethylolpropan und 168 g eines Polyesters aus Adipinsäure und Hexandiol-(1,6) mit der OH-Zahl 134 (Molekulargewicht: 840) gegeben. Man rührt das Gemisch bei 90°C, bis der berechnete NCO-Gehalt von 13,5 % erreicht ist. Dann gibt man 45,2 g ε-Caprolactam zu. Die Temperatur steigt auf ca. 110°C. Nach Abklingen der exothermen Reaktion wird ein Gemisch aus 40,2 g Dimethylolpropionsäure und 40,6 g N,N-Dimethylbenzylamin zugegeben. Man läßt ca. 30 Minuten bei 120°C nachrühren, gibt dann weitere 33,9 g ε-Caprolactam zu und rührt nochmals ca. 30 Minuten bei 120°C nach bis keine freien NCO-Gruppen mehr nachweisbar sind (IR-Spektrum). Danach wird die Schmelze auf ein Blech gegossen, wo sie beim Abkühlen glasartig erstarrt. Durch mechanisches Zerkleinern erhält man eine erfindungsgemäße Komponente a) in Form von festen Stücken.

    Mittleres Molekulargewicht: 1875
    Mittlere Funktionalität: 2,33
    Gehalt an blockierten Isocyanatgruppen (NCO): 5,2 %
    Gehalt an Urethangruppen: 13,6 %
    Gehalt an Carboxylatgruppen: 53,3 m Äquiv./100 g Feststoff
    Gehalt an Carboxylgruppen: 0 m Äquiv./100 g Feststoff

Zur Dispergierung wird das zerkleinerte Festharz zu einer bei Raumtemperatur vorgelegten Lösung von 30,6 g Triethylamin in 1148 g Wasser gegeben. Unter leichtem Rühren löst sich das Produkt innerhalb von ca. 2 Stunden auf, wobei gegebenenfalls auf 40°C erwärmt werden kann. Man erhält eine stabile, leicht opake, lösungsähnliche Dispersion. Der Feststoffgehalt beträgt 30 % und die Fordbecherviskosität (4 mm-Düse) 28 Sekunden.

Die Dispersion kann, z.B. in Kombination mit der Dispersion der erfindungsgemäßen Komponente b) aus Beispiel 1 zu und dem in Beispiel 1 C genannten Pigment pigmentierten wäßrigen Einbrennlacken formuliert werden. Diese liefern glänzende, harte Lacküberzüge mit hoher Dehnbarkeit und guter Haftung.

**Beispiel 7**

A. Herstellung einer erfindungsgemäßen Komponente a):

Zu 222 g Isophorondiisocyanat werden bei 60°C 192,5 g eines wasserfreien Polyethers aus Propylenoxid und Bisphenol A mit der OH-Zahl 202 (Molekulargewicht: 550) gegeben. Man rührt das Gemisch bei 100°C, bis der berechnete NCO-Gehalt von 13,2 % erreicht ist und gibt dann 45,2 g ε-Caprolactam zu. Nach Abklingen der exothermen Reaktion wird mit 50 g N-Methylpyrrolidon verdünnt und anschließend werden portionsweise 40,2 g Dimethylolpropionsäure zugesetzt. Man rührt 30 min bei 120°C, gibt dann weitere 33,9 g ε-Caprolactam zu und rührt nochmals ca. 30 min bei 120°C nach, bis keine freien NCO-Gruppen mehr nachweisbar sind (IR-Spektrum). Nach Zugabe von 26,7 g N,N-Dimethylethanolamin erhält man eine erfindungsgemäße Komponente a) in Form eines hochviskosen Harzes.

Mittleres Molekulargewicht: 1600
Mittlere Funktionalität: 2
Gehalt an blockierten Isocyanatgruppen (NCO): 5,2 % im Feststoff
Gehalt an Urethangruppen: 13,7 % im Feststoff
Gehalt an Carboxylatgruppen: 53,5 m Äquiv./100 g Feststoff
Gehalt an Carboxylgruppen: 0 m Äquiv./100 g Feststoff

Zur Dispergierung werden zu dem 90°C warmen Harz unter gutem Rühren 1169 g demineralisiertes Wasser zugegeben, das zuvor auf 90°C angewärmt wurde. Man erhält eine stabile, leicht opake, lösungsähnliche Dispersion. Der Feststoffgehalt beträgt 30 % und die Fordbecher-Viskosität (4 mm-Düse) 20 Sekunden.

B. Herstellung einer erfindungsgemäßen Komponente b):

Ein Gemisch aus 425 g eines Polyesters aus Adipinsäure, Hexandiol-(1,6) und Neopentylglykol (Molverhältnis HHexandiol : Neopentylglykol = 1,6 : 1) mit der OH-Zahl 66 (Molekulargewicht: 1700), 100 g N-Methylpyrrolidon, 50,2 g Hexandiol-(1,6), 20,1 g Trimethylolpropan und 80,4 g Dimethylolpropionsäure wird auf 100°C erhitzt, bis es eine klare Schmelze ergibt. Nach dem Abkühlen auf 80°C gibt man 168 g Hexamethylendiisocyanat zu und rührt bei 100°C, bis keine freien NCO-Gruppen mehr nachweisbar sind (IR-Spektrum). Dann werden 49,0 g N,N-Dimethylethanolamin zugegeben. Man erhält eine erfindungsgemäße Komponente b) in Form eines hochviskosen Harzes.

Mittleres Molekulargewicht: 1863
Mittlere Funktionalität: 2,35
Hydroxylgruppengehalt: 2,14 % im Feststoff
Gehalt an Urethangruppen: 14,9 % im Feststoff
Gehalt an Carboxylatgruppen: 69,4 m Äquiv./100 g Feststoff
Gehalt an Carboxylgruppen: 6,3 m Äquiv./100 g Feststoff

Zur Dispergierung werden zu dem 100°C warmen Harz unter gutem Rühren 1580 g demineralisiertes Wasser gegeben, das zuvor auf 80°C angewärmt wurde. Man erhält eine stabile, opake, feinteilige Dispersion. Der Feststoffgehalt beträgt 30 % und die Fordbecherviskosität (4 mm-Düse) 33 Sekunden.

C: Herstellung eines wäßrigen Einbrennlackes:

Aus 150 g der gemäß Vorschrift A erhaltenen Dispersion, 146,3 g der gemäß Vorschrift B erhaltenen Dispersion und 62 g Titandioxid wird in einer Perlmühle ein Lack mit einem Festkörpergehalt von 42 % und einer Pigmentierungshöhe von 70 % hergestellt. Das Bindemittel enthält 17,7 % an Polyethersegmenten und 27,3 % an Polyestersegmenten, die ausschließlich aus Adipinsäure, Hexandiol-(1,6) und Neopentylglykol aufgebaut sind. Ein daraus hergestellter, eingebrannter Lacküberzug zeichnet sich durch guten Glanz sowie hohe Dehnbarkeit und Elastizität aus.

**Beispiel 8**

Zu 174 g Diisocyanatotoluol (Gemisch aus 65 % des 2,4- und 35 % des 2,6-Isomeren) wird bei 40°C ein wasserfreies Gemisch aus 13,4 g Trimethylolpropan und 168 g eines Polyesters aus Adipinsäure und Hexandiol-(1,6) mit der OH-Zahl 134 (Molekulargewicht: 840) gegeben. Man rührt das Gemisch bei 80°C, bis der berechnete NCO-Gehalt von 15,4 % erreicht ist. Dann verdünnt man mit 100 g N-Methylpyrrolidon, kühlt auf 40°C ab und tropft anschließend innerhalb von 15 min 60,9 g Butanonoxim zu. Nach ca. 30 min bei 60°C ist der berechnete NCO-Gehalt von 4,9 % erreicht. Man gibt nun 40,2 g Dimethylolpropionsäure zu und rührt ca. 1 - 2 h, indem man die Temperatur auf 80°C steigert. Danach sind keine freien NCO-Gruppen mehr nachweisbar (IR-Spektrum). Nach Zugabe von 30,3 g Triethylamin erhält man eine erfindungsgemäße Komponente a) in Form eines hochviskosen Harzes.

Mittleres Molekulargewicht: 1620
Mittlere Funktionalität: 2,33
Gehalt an blockierten Isocyanatgruppen (NCO): 6,0 % im Feststoff
Gehalt an Urethangruppen: 15,8 % im Feststoff
Gehalt an Carboxylatgruppen: 61,7 m Äquiv./100 g Feststoff
Gehalt an Carboxylgruppen: 0 m Äquiv./100 g Feststoff

Zur Dispergierung werden zu dem 65°C warmen Harz unter gutem Rühren 718 g demineralisiertes Wasser gegeben. Man erhält eine stabile, feinteilige, opake Dispersion. Der Feststoffgehalt beträgt 35 % und die Fordbecherviskosität (4 mm-Düse) 18 Sekunden.

Die Dispersion kann. z.B. in Kombination mit der erfindungsgemäßen Komponente b) aus Beispiel 1 und dem im Beispiel 1C genannten Pigment zu pigmentierten wäßrigen Einbrennlacken formuliert werden. Diese liefern glänzende, harte Lacküberzüge mit hoher Dehnbarkeit und guter Haftung.

**Beispiel 9**

Zu 222 g Isophorondiisocyanat wird bei 60°C ein wasserfreies Gemisch aus 13,4 g Trimethylolpropan und 168 g eines Polyesters aus Adipinsäure und Hexandiol-(1,6) mit der OH-Zahl 134 (Molekulargewicht: 840) gegeben. Man rührt das Gemisch bei 100°C, bis der berechnete NCO-Gehalt von 13,5 % erreicht ist. Dann verdünnt man mit 100 g N-Methylpyrrolidon, kühlt auf 50°C ab und gibt eine Lösung von 1 g Natriumphenolat in 123 g Malonsäurediethylester zu. Es wird ca. 1 h bei 80°C bis zum Erreichen des berechneten NCO-Wertes von 3,5 % gerührt. Anschließend gibt man 40,2 g Dimethylolpropionsäure zu und läßt ca. 6 h bei 80°C reagieren. Danach sind keine freien NCO-Gruppen mehr nachweisbar (IR-Spektrum). Nach Zugabe von 30,3 g Triethylamin erhält man eine erfindungsgemäße Komponente a) in Form eines hochviskosen Harzes.

Mittleres Molekulargewicht: 1990

Mittlere Funktionalität: 2,33

Gehalt an blockierten Isocyanatgruppen (NCOI: 4,9 % im Feststoff

Gehalt an Urethangruppen: 12,8 % im Feststoff

Gehalt an Carboxylatgruppen: 50,2 m Äquiv./100 g Feststoff

Gehalt an Carboxylgruppen: 0 m Äquiv./100 g Feststoff

Zur Dispergierung werden zum dem 70°C warmen Harz unter gutem Rühren 1195 g demineralisiertes Wasser gegeben. Man erhält eine feinteilige, lösungsähnliche Dispersion mit einem Feststoffgehalt von 30 % und einer Fordbecherviskosität von 25 Sekunden.

Die Dispersion kann, z.B. in Kombination mit der erfindungsgemäßen Komponente b) aus Beispiel 1 und dem in Beispiel 1C genannten Pigment zur Herstellung pigmentierter, wäßriger Einbrennlacke eingesetzt werden. Die damit erhältlichen Lacküberzüge weisen guten Glanz, hohe Härte, hohe Dehnbarkeit und gute Haftung auf.

**Patentansprüche**

1. Pigmente und/oder Füllstoffe, sowie Kombinationen aus

a) ganz oder teilweise neutralisierte Carboxylgruppen, sowie blockierte Isocyanatgruppen aufweisenden Polyurethan-Prepolymeren

mit

b) ganz oder teilweise neutralisierte Carboxylgruppen aufweisenden Polyhydroxylverbindungen

als wesentliches Bindemittel und gegebenenfalls weitere Hilfs- und Zusatzstoffe enthaltende, wäßrige Einbrennlacke, dadurch gekennzeichnet, daß

die Bindemittelkomponente a) im wesentlichen aus einem Polyether- und/oder Polyesterurethan-Prepolymeren einer mittleren Funktionalität, bezogen auf die blockierten NCO-Gruppen, von 1,8 - 5 und eines mittleren, aus der Stöchiometrie der Ausgangsmaterialien errechenbaren Molekulargewichts von 500 - 10 000 mit einem Gehalt an blockierten Isocyanatgruppen (berechnet als NCO) von 2 - 15 Gew.-%, einem Gehalt an Urethangruppen (berechnet als -NH-CO-O-) von 5 bis 30 Gew.-% und einem Gehalt an eingebauten, zumindest teilweise neutralisierten Carboxylgruppen von 10 - 180 Milliäquivalenten pro 100 g Feststoff

und

die Bindemittelkomponente b) im wesentlichen aus einem freie alkoholische Hydroxylgruppen aufweisenden Polyether- und/oder Polyesterurethan-Prepolymeren einer mittleren Hydroxylfunktionalität von 1,8 - und eines mittleren, aus der Stöchiometrie der Ausgangsmaterialien errechenbaren Molekulargewichts von 500 - 10 000 mit einem Gehalt an alkoholischen Hydroxylgruppen von 0,5 - 10 Gew.-%, an Urethangruppen von 5 bis 30 Gew.-% und an eingebauten, zumindest teilweise neutralisierten Carboxylgruppen von 10 - 180 Milliäquivalenten pro 100 g Feststoff

bestehen, wobei

(i) die Komponenten a) und b) in einem Äquivalentverhältnis von blockierten Isocyanatgruppen in a) zu Hydroxylgruppen in b) von 0,6 : 1 bis 2 : 1 entsprechenden Mengen vorliegen,

(ii) die Gesamtmenge der Carboxylgruppen und ihr Neutralisiationsgrad so bemessen sind, daß die Löslichkeit bzw. Dispergierbarkeit des Bindemittels in Wasser gewährleistet ist,

(iii) in den Kombinationen der Bindemittelkomponenten a) und b) sowohl eingebaute Polyethersegmente als auch eingebaute Polyestersegmente vorliegen, wobei die Gesamtmenge der genannten Segmente jeweils mindestens 10 Gew.-%, bezogen auf die Kombination aus a) und b) beträgt und

(iv) die genannten Polyethersegmente zu höchstens 10 Gew.-% aus Ethylenoxideinheiten $CH_2-CH_2-O-$ bestehen.

2. Wäßrige Einbrennlacke gemäß Anspruch 1, dadurch gekennzeichnet, daß die in der Bindemittelkomponente a) und/oder in der Bindemittelkomponente b) vorliegenden Polyestersegmente zumindest zu 50 Gew.-% auf Adipinsäure, Hexandiol-(1,6) und/oder Neopentylglykol basieren.

3. Wäßrige Einbrennlacke gemäß Anspruch 1 und 2, dadurch gekennzeichnet, daß die in der Bindemittelkomponente a) und/oder in der Bindemittelkomponente b) vorliegenden Polyethersegmente sich zu mindestens 50 Gew.-% aus Propylenoxideinheiten zusammensetzen.

4. Wäßrige Einbrennlacke gemäß Anspruch 1 bis 3, dadurch gekennzeichnet, daß sowohl die Bindemittelkomponente a) als auch die Bindemittelkomponente b) jeweils mindestens eines der genannten Polyether- und/oder Polyestersegmente als Aufbaukomponente enthält.

5. Verwendung der wäßrigen Einbrennlacke gemäß Anspruch 1 bis 4 zur Herstellung von Lackfilmen und Beschichtungen.

## Claims

1. Aqueous stoving lacquers containing pigments and/or fillers, and comibinations of

a) polyurethane prepolymers containing partly or completely neutralised carboxyl groups and blocked isocyanate groups,

with

b) polyhydroxyl compounds containing partly or completely neutralised carboxyl groups

as the essential binder and optionally other auxiliaries and additives, characterised in that the binder component a) substantially consists of a polyether- and/or polyester urethane prepolymer having an average functionality, based on the blocked NCO groups, of 1.8 - 5 and an average molecular weight of 500 - 10,000 which may be calculated from the stoichiometry of the starting materials, with a content of blocked isocyanate groups (calculated as NCO) of 2 - 15 % by weight, a content of urethane groups (calculated as -NH-CO-O-) of 5 to 30 % by, weight and a content of incorporated, at least partly neutralised carboxyl groups of 10 - 180 milliequivalents per 100 g of solids,

and

the binder component b) substantially consists of a polyether- and/or polyester urethane prepolymer having free alcoholic hydroxyl groups, an average hydroxyl functionality of 1.8 - 5 and an average molecular weight of 500 - 10,000 which may be calculated from the stoichiometry of the starting materials, with a content of alcoholic hydroxyl groups of 0.5-10 % by weight, a content of urethane groups of 5 to 30 % by weight and a content of incorporated, at least partly neutralised carboxyl groups of 10 - 180 milliequivalents per 100 g of solids,

and

(i) the components a) and b) are present in quantities corresponding to an equivalent ratio of blocked isocyanate groups in a) to hydroxyl groups in b) of 0.6 : 1 to 2 : 1,

(ii) the total quantity of the carboxyl groups and the degree of neutralisation thereof are calculated so that the solubility or dispersibility of the binder in water is ensured,

(iii) there are polyether segments as well as polyester segments incorporated in the combinations of the binder components a) and b), and the total quantity of the above-mentioned segments amounts in each case to at least 10 % by weight, based on the combination of a) and b), and

(iv) the above-mentioned polyether segments consist to at the most 10 % by weight of ethylene oxide units $CH_2$-$CH_2$-O.

2. Aqueous stoving lacquers according to claim 1, characterised in that the polyester segments present in the binder component a) and/or in the binder component b) are based to at least 50 % by weight on adipic acid, hexane diol-(1,6) and/or on neopentyl glycol.

3. Aqueous stoving lacquers according to claim and 2, characterised in that the polyether segments present in the binder component a) and/or in the binder component b) are composed to at least 50 % by weight of propylene oxide units.

4. Aqueous stoving lacquers according to claim 1 to 3, characterised in that the binder component a) and the binder component b) contain in each case at least one of the above-mentioned polyether- and/or polyester segments as a synthesis component.

5. The use of the aqueous stoving lacquers according to claim 1 to 4 for the production of lacquer films and coatings.

## Revendications

1. Vernis à cuire aqueux contenant des pigments et/ou des matières de charge, de même que des combinaisons

a) de prépolymères de polyuréthanes présentant des groupes carboxyle totalement ou partiellement neutralisés de même que des groupes isocyanate bloqués,

avec

b) des composés polyhydroxylés présentant des groupes carboxyle totalement ou partiellement neutralisés, comme liant essentiel, et contenant éventuellement d'autres auxiliaires et additifs, caractérisés en ce que le composant de liant a) consiste essentiellement en un prépolymère de polyéther- et/ou polyester-uréthane d'une fonctionnalité moyenne, rapportée aux groupes NCO bloqués, de 1,8 - 5 et un poids moléculaire moyen, calculable d'après la stoechiométrie des matièrs premières, de 500 à 10 000, avec une teneur en groupes isocyanate bloqués (calculée en NCO) de 2 à 15% en poids, une teneur en groupes uréthane (calculée en -NH-CO-O-) de 5 à 30% en poids et une teneur en groupes carboxyle incorporés, tout au moins partiellement neutralisés, de 10 - 180 milliéquivalents par 100 g de matière solide,

et

en ce que le composant de liant b) consiste essentiellement en un prépolymère de polyéther-et/ou de polyester-uréthane, présentant des groupes hydroxyle libres alcooliques, d'une fonctionnalité hydroxyle moyenne de 1,8 - 5 et d'un pois moléculaire moyen, calculable d'après la stoechiométrie des matières premières, de 500 à 10 000, avec une teneur en groupes hydroxyle alcooliques de 0,5 - 10% en poids, en groupes uréthane de 5 à 30% en poids et en groupes carboxyle incorporés, tout au moins partiellement neutralisés, de 10 - 180 milliéquivalents par 100 g de substance solide, en l'occurence

(i) les composants a) et b) se présentant en des quantités correspondant à un rapport d'équivalence entre les groupes isocyanate bloqués dans a) et les groupes hydroxyle dans b) de 0,6 : 1 à 2 : 1,

(ii) la quantité totale des groupes carboxyle et leur degré de neutralisation étant réglés pour que la solubilité ou la dispersibilité du liant dans l'eau soit assurée,

(iii) dans les combinaisons des composants de liant a) et b) étant présents aussi bien des segments polyéther incorporés que des segments polyester incorporés, la quantité totale des segments cités s'élevant chaque fois au moins à 10% en poids par rapport à la combinaison de a) et de b),

et

(iv) les segments polyéther cités consistant au maximum en 10% en poids d'unités oxyde d'éthylène $CH_2$-$CH_2$-O-.

2. Vernis à cuire aqueux selon la revendication 1, caractérisés en ce que les segments polyester présents dans le composant de liant a) et/ou dans le composant de liant b) sont à base d'au moins 50% en poids d'acide adipique, d'hexane diol-(1,6) et/ou de néopentyl glycol.

3. Vernis à cuire aqueux selon les revendications 1 et 2, caractérisés en ce que les segments polyéther présents dans le composant de liant a) et/ou dans le composant de liant b) se composent d'au moins 50% en poids d'unités oxyde de propylène.

4. Vernis à cuire aqueux selon les revendications 1 à 3, caractérisés en ce qu'aussi bien le composant de liant a) que le composant de liant b) contiennent chacun au moins un des segments polyéther et/ou polyester cités comme composants de constitution.

5. Utilisation des vernis à cuire aqueux selon les revendications 1 à 4 pour la fabrication de films de vernis et d'enduits.